# EUROPEAN PATENT SPECIFICATION

(11) **EP 1 519 216 B1**
(45) Date of publication and mention of the grant of the patent: **06.10.2010**
(21) Application number: 02741376.4
(22) Date of filing: 01.07.2002
(51) Int. Cl.: G02C 5/22

(54) **SPECTACLES HINGE**
BRILLENGELENK
CHARNIERE DE LUNETTES

(43) Date of publication of application: 30.03.2005
(73) Proprietor: Paris Miki Inc., Chuo-ku, Tokyo 103-0022 (JP); Fukui Megane Industry Co., Ltd., Sabae-shi, Fukui 916-8508 (JP)
(72) Inventor: KANOU, Seiji c/o Paris Miki Inc., Tokyo 104-0061 (JP); NOJI, Hiromi, FUKUI MEGANE INDUSTRY CO., LTD., Sabae-shi, Fukui 916-8508 (JP)
(74) Representative: Banzer, Hans-Jörg
(86) International application number: PCT/JP2002/006634
(87) International publication number: WO 2004/003635

(56) References cited:
- EP-A1- 0 695 962
- WO-A-97/23803
- WO-A-97/43683
- JP-A- 8 234 145
- US-A- 5 880 807
- US-A1- 2002 054 272

## Description

### TECHNICAL FIELD

The present invention relates to a screw-less hinge for spectacles using a single metal material for the entire set of spectacles excluding some spectacles parts, such as lenses, engagement rods (temple ends), and nose pads, the hinge having a mechanism for allowing each temple to turn with respect to a corresponding lug and preventing play of the temple, in both an opened state and a closed state.

### BACKGROUND ART

A pair of spectacles consists of left and right lenses; a rim which supports the paired lenses at their peripheral edges and serves as a main body of a spectacle frame; and other parts such as nose pads, temples, and engagement rods (temple ends) which engage the nose, ears, etc., of a person who wears the spectacles.

In such rim-type spectacles, lugs are brazed to opposite outer sides of the rim, and temples are connected to the corresponding lugs by means of hinges to thereby enable the temples to be folded when the spectacles are not used. Incidentally, turning motion of the temples with respect to the lugs preferably involves resistance of a proper degree rather than no resistance. In the field of spectacles, the degree of resistance for turning motion of the temples with respect to the lugs is called resisting characteristic.

In order to attain a wider field of view and a lighter weight as compared to those attained with rim-type spectacles, there have been provided rim-less-type spectacles in which the spectacle frame is formed without use of the rim. In such rim-less-type spectacles, in order to cope with demand for weight reduction to the greatest possible extent, frames have been formed of a thin wire of metal or the like, lugs have been attached directly to lenses, or lugs have been improved so as to enable turning motion of temples without use of hinges.

An example structure for enabling turning motions of temples relative to lugs without use of hinges is disclosed in Japanese Utility Model Registration No. 3015058, entitled "Temple Joint Structure of Eyeglass Frame." In this invention, an end portion of each lug formed of a wire material is bent so as to form a rectangular ring having a vertical portion; a piece of pipe serving as a bearing is fixed to a ring at an end portion of a temple; and the vertical portion at the end of the lug is inserted into the shaft hole of the bearing, whereby a screw-less hinge mechanism is realized. Moreover, Japanese Patent Application Laid-Open (kokai) No. 08-50264, entitled "Turning Method in Spectaculars and Turning Mechanism therefore" proposes a structure similar to that disclosed in Japanese Utility Model Registration No. 3015058, except that resistance is imparted to turning motions of temples with respect to lugs. Specifically, a shaft portion at each temple end (an end of a temple adjacent to a corresponding bracket (lug)) is brought into press contact with the bracket, to thereby impart resistance to turning motion of the shaft portion.

A hinge mechanism described in Japanese Patent Application Laid-Open (kokai) No. 2000-221452, entitled "Spectacle Frame," has the same temple turning structure as that disclosed in Japanese Patent Application Laid-Open No. 08-50264. However, the hinge mechanism is structured in such a manner that, with mediation of a connection piece formed of synthetic resin, a connection-piece attachment portion of each lug is fitted into a pivot hole of a corresponding temple. The degree of tightness of the pivot hole is finely adjusted so as to generate a proper frictional resistance to turning motion of the temple.

In the case of spectacle temple open/close structures, such as those disclosed in the above-mentioned "Temple Joint Structure of Eyeglass Frame" and "Turning Method in Spectaculars and Turning Mechanism therefor," which do not use ordinary screw-type hinges, resistance at the time of turning temples cannot be found unless the temples are attached to lugs. Further, since adjustment of such turning resistance requires removal of the temples from the lugs, the adjustment is difficult. In contrast, the "Spectacle Frame" has a structure which enables fine adjustment of the above-mentioned resisting characteristic to be performed before attachment of temples to lugs. However, the frictional resistance at the time of turning motion is generated by means of synthetic resin (connection piece) interposed between the pivot hole of each temple and the connection-piece attachment portion of a corresponding lug.

Gold frames are popular spectacle frames. However, when a spectacle frame is fabricated from parts formed of a single metal (gold), weight increases. Therefore, weight reduction is demanded. The above-mentioned inventions; i.e., techniques, have enabled such weight reduction and structure simplification. However, the above-described techniques have a drawback in that temples cannot be stably maintained at their open positions or closed positions. The "Turning Method in Spectaculars and Turning Mechanism therefor" proposes a structure in which a concave portion is provided on one end of each bracket (lug), and the shaft of a corresponding temple is pressed against the concave portion. However, this arrangement is intended only to prevent application of excessive mechanical force to the turning mechanism, not to stably maintain the temple. In the "Spectacle Frame," friction resistance produced by means of tightening the turning portion is utilized so as to enable stable opening and closing operation while providing proper resistance. However, synthetic resin is used at connection portions.

US 5,880,807 A discloses a mount for spectacles having the features of the preamble of claim 1.

US 2002/054272 A1 discloses an eyeglass having a hinge comprising a coupling member formed of wire material and having a curved portion at one end, and a fit member which is provided at one end of a temple and is fitted between wire materials of the curved portion to be rotatable. The curved portion of the coupling member may be formed to extend along a direction defined by the temple in its opened state to allow the fit member to contact the coupling member at least at two points.

An object of the present invention is to provide a screw-less hinge mechanism for spectacles, the frame of which is formed from a single material, the screw-less hinge mechanism being configured based on the above-mentioned conventional technique but eliminating play of temples to thereby stably maintain the temples in an open state or a closed state. Notably, the term "hinge mechanism" used herein refers to a portion of a spectacle frame having a structure for rotatable connection, and does not refer to a hinge, which is an independent part of spectacles. Accordingly, the term "screw-less hinge" refers to a connection portion which is provided between a temple and a lug, which does not use a conventional hinge (screw hinge), and which provides a turning function (hinge function).

### DISCLOSURE OF THE INVENTION

According to the present invention, the above-stated object is achieved by a hinge mechanism as defined by claim 1. The dependent claims define preferred or advantageous embodiments.

A hinge is a portion for connecting a temple to a front rib and enabling the temple to be opened and closed. An ordinary hinge fixes a temple to a rim by use of a screw and via a lug provided between the rim and the temple, to thereby enable opening and closing of the temple. In the case of a screw hinge, the resisting characteristic can be finely adjusted through adjustment of the degree of tightness of the screw, whereby play of temples can be eliminated at their open state or closed state.

In the "Spectacle Frame" discussed in the background art section, synthetic resin is used for the turning mechanism portions, whereby friction resistance can be adjusted through adjustment of the degree of tightness of the pivot hole. In contrast, the present invention employs a simple structure which does not use synthetic resin. Therefore, the stability of each temple in an open state and a closed state must be attained by a different method. In order to attain this, the present invention employs a hinge mechanism in which each temple is held by a portion of a corresponding lug when the temple is in an open or closed state.

Specifically, the present invention provides a hinge mechanism for spectacles in which a temple formed of metal is turned with respect to a corresponding lug formed of a metal, wherein each of the temple and the lug is formed of a wire-like metal material; a tip end of the temple is formed into an annular shape so as to define a pivot hole; a pivot portion of the lug is inserted into the pivot hole whereby turning motion of the temple is enabled; and a temple-side end portion of the lug controls opening of the temple and prevents the temple from turning inward from an open position.

The above-mentioned wire-like metal material is preferably hollow, from the viewpoint of strength. When the wire-like metal material has a generally cylindrical shape, manufacture of the wire-like metal material is easy. However, the shape of the wire-like metal material is not limited hereto. For example, the wire-like metal material may have an oval cross section.

### BRIEF DESCRIPTION OF THE DRAWINGS

FIG. 1 is an explanatory view of a hinge mechanism according an embodiment of the present invention, the hinge mechanism having an open-state holding portion.
FIG. 2 is another explanatory view of the hinge mechanism according the embodiment of the present invention, the hinge mechanism having an open-state holding portion.
FIG. 3 is a pair of perspective views of a hinge mechanism according to the present invention, the hinge mechanism having a concavely curved, open-state holding portion.
FIG. 4 is a pair of cross-sectional views of the hinge mechanism according to the present invention having a concavely curved, open-state holding portion, showing a method of holding a temple in the holding portion.
FIG. 5 is a pair of perspective views of a hinge mechanism according to the present invention, the hinge mechanism having a concavely curved, open-state holding portion.
FIG. 6 is a pair of perspective views of a hinge mechanism according to the present invention, the hinge mechanism having a concavely curved, open-state holding portion and a closed-state holding portion.
FIG. 7 is a set of explanatory views of a turning portion of the hinge mechanism according to the embodiment of the present invention.
FIG. 8 is a perspective view of rim-less spectacles having a hinge mechanism according to the present invention having an open-state holding portion.

### BEST MODE FOR CARRYING OUT THE INVENTION

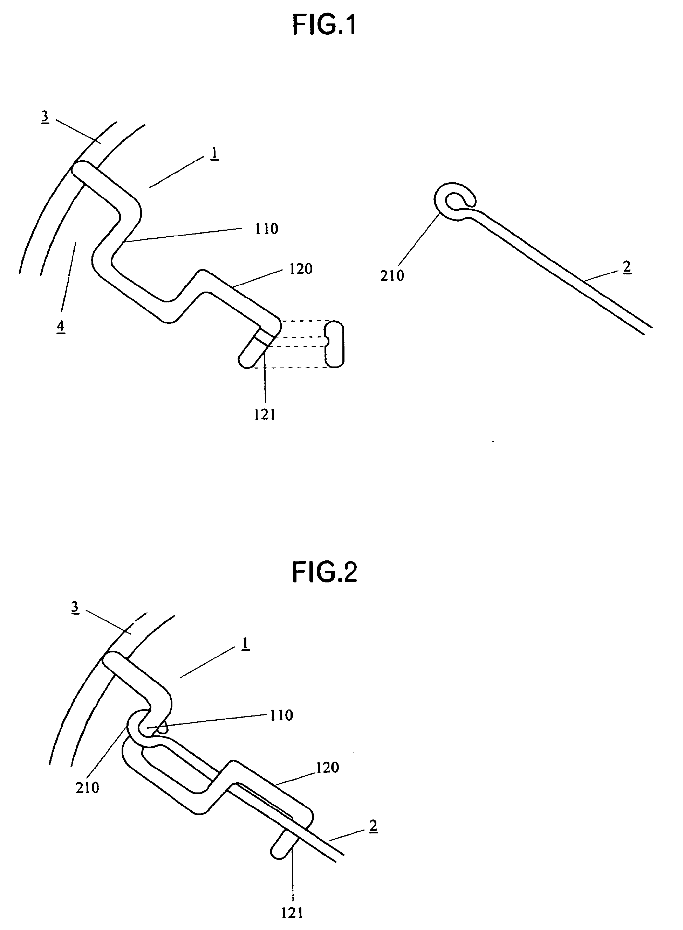

An embodiment of the present invention will be described with reference to the drawings. FIG. 1 is an explanatory view of a hinge mechanism according an embodiment of the present invention, the hinge mechanism having an open-state holding portion. FIG. 1 shows a state in which a lug is attached to a rim. The lug 1 is brazed to the rim 3. The lug is fabricated by bending a wire-like member so as to have a connection attachment portion (pivot) 110 and a hook-shaped open-state holding portion 120 for holding a temple when the temple is opened. Meanwhile, an annular portion or pivot hole portion 210 is formed at an end of the temple 2. The lug 1 is passed, from the distal end of the open-state holding portion 120, through the pivot hole portion 210 in such a manner that the pivot hole portion 210 is held on the pivot 110.

FIG. 2 shows a state in which the temple is opened. The open-state holding portion 120 is slightly bent toward the inner side of the temple so as to hold the shaft portion of the temple 2. Thus, the temple is fixed. If necessary, as shown in a partial cross section of FIG. 1, a concave portion (stopper) may be formed at a location on a distal end portion 121 of the open-state holding portion so as to hold the temple more stably when the temple is opened.

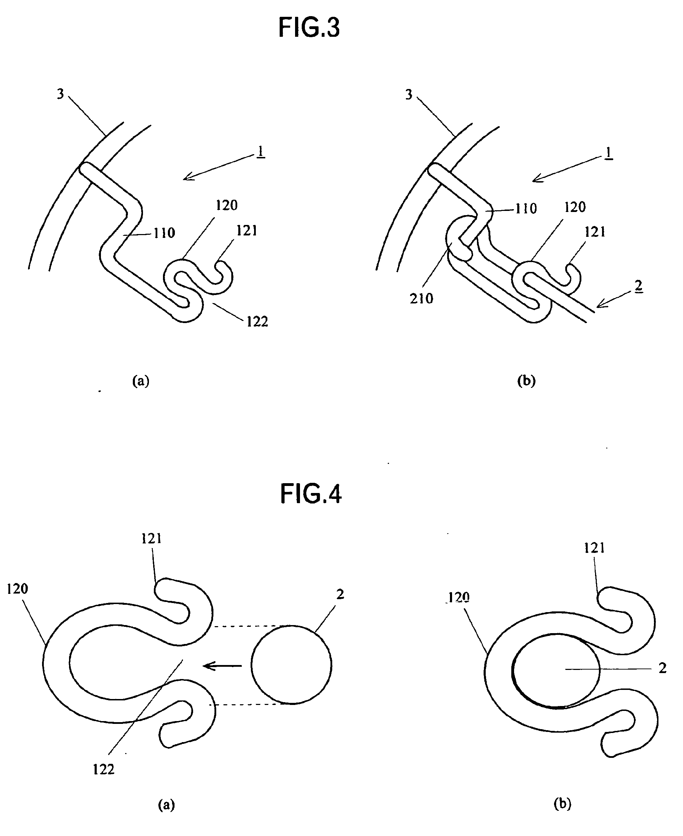

In the above-described embodiment, the end portion of the lug is bent to form a hook-shaped holding portion, and the temple is engaged with the hook-shaped holding portion. However, as shown in FIG. 3, the end portion of the lug may be concavely curved so as to form a concavely curved, open-state holding portion 120. When the temple is opened, the concavely curved, open-state holding portion 120 pinches the shaft portion of the temple 2 to thereby fix the temple. The temple 2 is connected to the lug by pasting the lug, from the distal end 121 of the open-state holding portion, through the pivot hole portion 210 in such a manner that the pivot hole portion 210 is held on the pivot 110 (see section (b) of FIG. 3). The reason why the distal end 121 of the open-state holding portion is bent outward is to provide a divergent insertion opening 122, to thereby facilitate insertion of the temple.

The width of the insertion opening 122 is rendered slightly smaller than the shaft transverse dimension of the temple (diameter when the temple has a cylindrical shape). FIG. 4 shows two cross sections of the open-state holding portion and the shaft of the temple. The insertion opening 122 is formed to have a width slightly smaller than the size of the temple. Therefore, when the temple is inserted into the open-state holding portion 120, the temple is pressed into the open-state holding portion 120 (see section (a)). Since the insertion opening 122 of the lug is widened because of elasticity of the material thereof, the temple can be easily inserted (see section (b)). Since the temple is completely inserted into the open-state holding portion, play is eliminated. When the temple is closed, the template can be easily removed from the holding portion by virtue of elasticity of the lug.

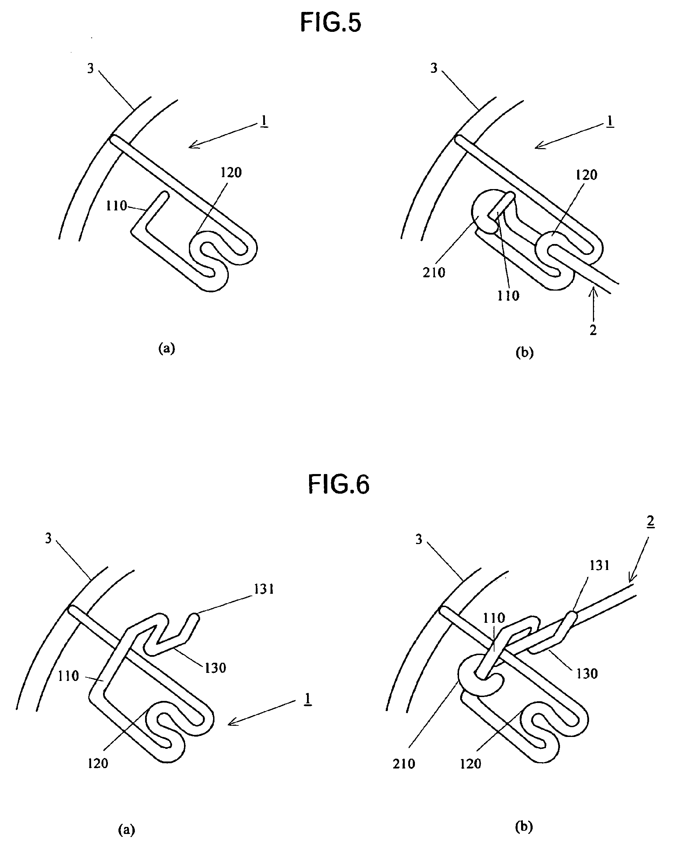

The lug having a concavely curved, open-state holding portion may be formed in the shape shown in FIG. 5. Although the above-mentioned lug can hold the temple (in an open state) when it is opened, the temple has a play when it is in a closed state (when closed). In view of this, a distal end of the lug having the shape shown in FIG. 5 is extended so as to form a holding portion for holding the temple when closed. FIG. 6 shows an example in which the distal end of the lug is extend to form a hook-shaped holding portion. Accordingly, the lug has an open-state holding portion 120 and a closed-state holding portion 130. Section (b) of FIG. 6 shows a state in which the shaft portion of the closed temple 2 is engaged with the closed-state holding portion 130. The closed-state holding portion 130 may have a concavely curved shape as shown in FIG. 4.

In the example shown in Fig. 6, the closed-state holding portion 130 is formed by merely extending the pivot 110 above and across the shaft portion of the lug. However, the extended portion may be wound around the shaft portion of the lug so as to stabilize the closed-state holding portion 130.

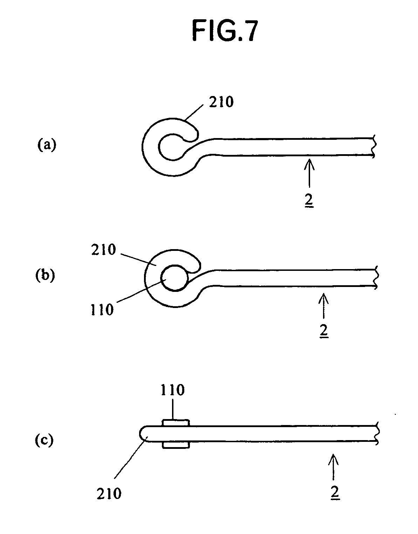

FIG. 7 is a set of explanatory views of a turning portion of the hinge mechanism according to the embodiment of the present invention, wherein section (a) shows a temple of the present invention; section (b) is a top view showing a state in which the pivot 110 of the lug is inserted into the pivot hole of the temple; and section (c) is a side view of the temple and the pivot.

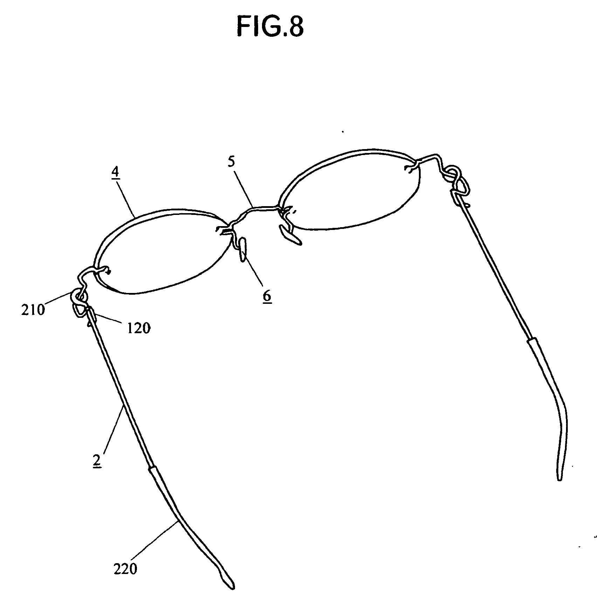

FIG. 8 is a perspective view of rim-less spectacles having a hinge mechanism according to the present invention having an open-state holding portion. The wire material used in the present invention is preferably formed of a metal, such as gold alloy (e.g., heat-treated 14K), which can stably maintain a shape and has elasticity. By virtue of elasticity of metal wire material, the temple can be held stably.

### INDUSTRIAL APPLICABILITY

According to the present invention, each hinge portion can be formed from a metal wire material. Thus, the entirety of a spectacle frame can be formed of a single metal wire material, whereby the weight of the frame can be reduced. In particular, when gold that is preferred by clients but is heavy is used, not only the weight but also the number of metal parts other than gold parts can be reduced, whereby production cost can be lowered.

The hinge mechanism of the present invention cannot have the same resisting characteristic as ordinary hinges. However, since a high level of stability is attained in the opened state, no practical problem arises. Moreover, the entire frame is formed of a thin wire, imparting a streamlined structure, which is preferably from the viewpoint of appearance. Furthermore, since each temple is held between two points; i.e., between the pivot and the open-state holding portion, the frame has no location where stresses concentrate, and is therefore hardly broken.

In summary, the present invention provides the following advantageous effects.
- Screw-less hinge mechanisms formed of a single metal material can be realized.
- A light and simple design is possible.
- Temples can be stably held in an open or closed state without provision of special measures, such as resin, for high mechanisms.
- The structure of lugs is simple, and replacement of temples is easy.

## Claims

1. A hinge mechanism for spectacles in which a temple (2) and a lug (1) are both formed of a wire-like metal material; an end (210) of the temple (2) is formed into an annular shape so as to define a pivot hole; a pivot portion (110) of the lug (1) formed through bending the wire-like material of the lug (1) is inserted into the pivot hole whereby turning motion of the temple (2) is enabled; and the lug (1) is extended from the pivot portion (110) along the temple (2),
**characterized in that**
the lug (1) is bent so that a distal end portion of the lug (1) is located on the inner side of the opened temple (2), to thereby form a temple-open-state holding portion (120) for preventing the opened temple (2) from turning inward.

2. A hinge mechanism for spectacles according to claim 1, wherein a concave portion for receiving the temple (2) is formed on the temple-open-state holding portion (120).

3. A hinge mechanism for spectacles according to claim 1, wherein a curved portion (122) for receiving the temple (2) is formed on the temple-open-state holding portion (120).

## Patentansprüche

1. Gelenkmechanismus für Brillen, bei welchem ein Bügel (2) und ein Ansatz (1) beide aus einem drahtähnlichen Metallmaterial ausgebildet sind; wobei ein Ende (210) des Bügels (2) in einer ringförmigen Form ausgebildet ist, um so ein als Drehstelle fungierendes Loch zu definieren; wobei ein Drehzapfenabschnitt (110) des Bügels (1), welcher durch Biegen des drahtähnlichen Materials des Bügels (1) ausgebildet ist, in das als Drehstelle fungierende Loch eingeführt ist, wodurch eine Klappbewegung des Bügels (2) ermöglicht wird; und wobei sich der Ansatz (1) von dem Drehzapfenabschnitt (110) entlang des Bügels (2) erstreckt,
**dadurch gekennzeichnet,**
**dass** der Ansatz (1) derart gebogen ist, so dass ein distaler Endabschnitt des Ansatzes (1) auf der Innenseite des geöffneten Bügels (2) angeordnet ist, um **dadurch** einen den Bügel in einer geöffneten Lage haltenden Abschnitt (120) auszubilden, um so zu verhindern, dass der geöffnete Bügel (2) nach innen klappt.

2. Gelenkmechanismus für Brillen nach Anspruch 1, **dadurch gekennzeichnet, dass** ein konkaver Abschnitt zur Aufnahme des Bügels (2) auf dem den Bügel in einer geöffneten Lage haltenden Abschnitt (120) ausgebildet ist.

3. Gelenkmechanismus für Brillen nach Anspruch 1, **dadurch gekennzeichnet, dass** ein gebogener Abschnitt (122) zur Aufnahme des Bügels (2) auf dem den Bügel in einer geöffneten Lage haltenden Abschnitt (120) ausgebildet ist.

## Revendications

1. Mécanisme d'articulation pour lunettes dans lequel une branche (2) et un tenon (1) sont tous les deux formés d'un matériau métallique en forme de fil ; une extrémité (210) de la branche (2) présente une forme annulaire afin de définir un orifice de pivotement ; une partie de pivotement (110) du tenon (1), formée en cintrant le matériau en forme de fil du tenon (1), est insérée dans l'orifice de pivotement, moyennant quoi un mouvement rotatif de la branche (2) est possible ; et le tenon (1) est étendu à partir de la partie de pivotement (110) le long de la branche (2), **caractérisé en ce que** le tenon (1) est cintré de sorte qu'une partie d'extrémité distale du tenon (1) se situe sur le côté intérieur de la branche ouverte (2), pour ainsi former une partie de maintien d'état ouvert de branche (120) pour empêcher la branche ouverte (2) de tourner vers l'intérieur.

2. Mécanisme d'articulation pour lunettes selon la revendication 1, dans lequel une partie concave pour recevoir la branche (2) est formée sur la partie de maintien d'état ouvert de branche (120).

3. Mécanisme d'articulation pour lunettes selon la revendication 1, dans lequel une partie incurvée (122) pour recevoir la branche (2) est formée sur la partie de maintien d'état ouvert de branche (120).
